Europäisches Patentamt

European Patent Office

Office européen des brevets

(11) Veröffentlichungsnummer: **0 494 354 A1**

# EUROPÄISCHE PATENTANMELDUNG

(21) Anmeldenummer: **91119120.3**

(51) Int. Cl.⁵: **C08K 5/54**

(22) Anmeldetag: **11.11.91**

(30) Priorität: **07.01.91 DE 4100218**

(43) Veröffentlichungstag der Anmeldung:
**15.07.92 Patentblatt 92/29**

(84) Benannte Vertragsstaaten:
**BE DE ES FR GB IT LU NL**

(71) Anmelder: **DEGUSSA AG**
**Weissfrauenstrasse 9**
**W-6000 Frankfurt (Main)(DE)**

(72) Erfinder: **Görl, Udo, Dr.**
**Herderstrasse 38**
**W-5303 Bornheim-Roisdorf(DE)**
Erfinder: **Wolff, Siegfried, Dr.**
**Weiherstrasse 28**
**W-5303 Bornheim-Merten(DE)**

(54) **Durch Wärmeentwicklung vulkanisierbare Formmassen II.**

(57) Die Erfindung betrifft durch Wärmeeintwicklung vulkanisierbare Formmassen, die mit Aluminium- und/oder Magnesiumhydroxid flammhemmend ausgerüstet sind und ein Thiocyanatopropyltrialkoxysilan enthalten.

EP 0 494 354 A1

Die Erfindung betrifft durch Wärmeentwicklung vulkanisierbare Formmassen, die mit Aluminium- und/oder Magnesiumhydroxid flammhemmend ausgerüstet sind und ein Verfahren zur Herstellung.

In der Kautschuk- und Kunststoff-verarbeitenden Industrie werden vielfach Artikel mit flammhemmenden Eigenschaften hergestellt. Hierzu gehören u. a. schwer entflammbare Kabelmantelmischungen, Fördergurte und Mischungen für den Einsatz in der Bauindustrie.

Ein Maß für die flammhemmende wirkung einer Mischung ist die LOI-Zahl (Limit of Oxygen Index) gemäß ASTM 2863. Der Oxygen Index beinhaltet die Mindestkonzentration an Sauerstoff, ausgedrückt in Volumenprozent, in der Mischung aus Sauerstoff und Stickstoff, bei der das unter den Bedingungen der Testmethode (ASTM 2863) untersuchte Material gerade noch unter Flammbildung verbrennt.

Eine Mischung genügt den Ansprüchen bezüglich Flammhemmung, wenn der LOI-Index über 30 % liegt.

Um diese Zahl in der Vergangenheit zu erreichen, wurden der Polymermischung flammhemmende Schutzstoffe und zwar Antimontrioxid, Chlorparaffine und bromierte Verbindungen zugesetzt. Alle diese Verbindungen sind jedoch stark toxisch bzw. führen bei Brand zu stark toxischen Zersetzungsprodukten und sind daher nach den heutigen Gesundheits- und Umweltkriterien nicht länger einsetzbar.

Als nicht toxische Alternative haben sich daher in den letzten Jahren verstärkt Zusatzstoffe, wie Aluminium- und Magnesiumhydroxid bewährt. Aufgrund ihres hohen Gehaltes an Kristallwasser, das bei Temperaturen von > ca. $250^0$ C freigesetzt wird, besitzen sie beim Brand eines Gummiartikels eine verlöschende Wirkung.

Um jedoch mit diesem Stoffen der Norm entsprechenede flammhemmende Vulkanisate, d. h. eine LOI-Index von > 30 % zu erreichen, ist eine Dosierung dieser Stoffe von 120 bis 150 Gew.-Teilen, bezogen auf 100 Gew.-Teile Kautschuk bzw. Kunststoff, notwendig.

Diese hohen Zusätze haben zur Folge, daß die mechanischen Eigenschaften der mit Aluminiumhydroxid bzw. Magnesiumhydroxid versetzten Mischungen stark verschlechtert werden und hierdurch bestimmte Spezifikationen bezüglich der Vulkanisateigenschaften dieser Artikel, die neben den flammhemmenden Eigenschaften ebenfalls notwendig sind, nicht mehr erreicht werden.

Aufgabe der Erfindung ist es, ein Mittel zu finden, das trotz dieser, die allgemein verwendeten Füllstoffmengen in Kunststoffen und Kautschuken deutlich übersteigenden Gewichtsanteile geeignet ist, die mechanischen Eigenschaften der mit flammhemmenden Schutzstoffen auf der Basis von Aluminium- und Magnesiumhydroxid gefüllten Polymermischungen zu verbessern.

Gegenstand der Erfindung sind durch Wärmeeinwirkung vulkanisierbare Formmassen, flammhemmend mit Aluminium-und/oder Magnesiumhydroxid ausgerüstet, bestehend aus einem oder mehreren natürlichen oder künstlichen Kautschuken bzw. Kunststoffen, die entweder mit Schwefel oder Schwefelspendern und Beschleunigern oder mit Peroxiden vulkanisierbar sind, sowie Füllstoffen und weiteren üblichen Bestandteilen, wie Weichmacher, Stabilisatoren, Aktivatoren, Pigmente, Alterungsschutzmittel, Verarbeitungshilfsmittel und Organosiliciumverbindungen, die dadurch gekennzeichnet sind, daß sie Aluminium- und/oder Magnesiumhydroxid in einer Gesamt-Menge von 20 bis 200 Gew.-Teilen pro 100 Gew.-Teilen Kautschuk oder Kunststoff und eine Organosiliciumverbindung der allgemeinen Formel (I)

$(RD)_3 Si-(CH_2)_3-SCN$    enthalten,

in der R eine Alkylgruppe mit 1 bis 8 Kohlenstoffatomen darstellt.

Diese Verbindungen werden insbesondere in Mengen von 0,1 bis 10 Gew.-Teilen, bevorzugt 0,5 bis 3 Gew.-Teile, bezogen auf 100 Gew.-Teile des Polymeren, eingesetzt.

Um den nötigen Flammschutz zu erreichen, werden die Mischungen mit Aluminium- bzw. Magnesiumhydroxid auch als Gemisch in Mengen von 20 bis 200 Gew.-Teilen, bevorzugt 100 bis 150 Gew.-Teile, bezogen auf 100 Gew.-Teile Kautschuk bzw. Kunststoff, versetzt. Niedrige Mengen, wie etwa 20 Gew.-Teile, werden vor allem dann verwendet, wenn nicht der gesamte Anteil der sonst verwendeten flammhemmenden Schutzstoffe ersetzt werden.

Die anorganischen Hydroxide werden entweder getrennt oder zusammen mit der Organosiliciumverbindung eingemischt.

Zu diesem Zweck kann man eine Vormischung verwenden oder mit der Organosilicumverbindung umgesetzte Hydroxide.

Verfahren zur Herstellung laufen analog denen modifizierter Füllstoffe und sind in der EP-PS 0177674 und der deutschen Anmeldung P 40 04 781.4 beschrieben.

Werden die erfindungsgemäß einzusetzenden Verbindungen der zu vulkanisierenden Mischung in situ zugegeben, oder auch in modifizierter Form, so führt dies zu einer Erniedrigung der Viskosität der Mischung und damit zu einer besseren Verarbeitbarkeit.

Die erfindungsgemäß vulkanisierbaren Formmassen werden nach den allgemein bekannten Verfahren hergestellt.

Man vermischt die Komponenten - bis auf das peroxidische Vernetzungsmittel bzw. die Beschleuniger in beliebiger Reihenfolge, bis man eine homogene Mischung erreicht hat.

Nach der Zugabe des Peroxids bzw. der Beschleuniger und der entsprechenden Temperaturerhöhung setzt dann die Vulkanisation ein.

Zu den herkömmlichen Komponenten, wie sie allgemein verwendet werden, gehören z. B. Alterungsschutzmittel, Weichmacher, Verarbeitungshilfsmittel, Stabilisatoren, Pigmente sowie auch weitere Organosiliciumverbindungen anderer Struktur.

Es hat sich gezeigt, daß die erfindungsgemäßen vulkanisierten Formmassen in Bezug auf die Compression Set-Werte, die Zerreißfestigkeit und den Modul deutlich bessere Werte aufweisen, wie das folgende Beispiel zeigt.

Prüfnormen für die Auswertung

|  | Prüfmethode | Einheit |
| --- | --- | --- |
| Mooney Viskosität | DIN 53523/524 | ME |
| Zugfestigkeit | DIN 53504 | MPa |
| Modul 300% | DIN 53504 | MPa |
| Compression Set | ASTM D 395 | % |

Im Anwendungsbeispiel werden folgende Namen und Abkürzungen benutzt, deren Bedeutung hier aufgeführt wird:

| | |
| --- | --- |
| Keltan 578 | EPDM der Firma DSM |
| Elvax 260 | Ethylen-vinyl-acetat (EVA) |
| Apyral 120 | Aluminiumhydroxid |
| Protector G 35 | Ozonschutzwachs |
| Vulkanox HS | 2,2,4-Trimethyl-1,2-dihydrochinolin |
| TRIM | Aktivator |
| Si 164 | 3-Thiocyanatopropyltrimethoxy-Silan |
| Perkadox 14/40 | 1,3-Bis-(tert-butyl-peroxyl-isopropyl)-benzol |
| Struktol WB 16 | Verarbeitungshilfsmittel |

Beispiel 1: Si 164 in einer schwer entflammbaren Kabelmantelmischung auf Basis EPDM/EVA

|  |  | 1 | 2 |
|---|---|---|---|
| Keltan 578 |  | 70 | 70 |
| Elvax 260 |  | 30 | 30 |
| Apyral 120 |  | 120 | 120 |
| A 172 |  | 1 | 1 |
| Protector G 35 |  | 5 | 5 |
| Sunpar 2280 |  | 5 | 5 |
| Struktol WB 16 |  | 2,5 | 2,5 |
| Vulkanox HS |  | 1,5 | 1,5 |
| TRIM |  | 1 | 1 |
| Si 164 |  | - | 1,2 |
| Perkadox 14/40 |  | 5 | 5 |
| | | | |
| Mooney Viskosität ML 4 (100°C) | (ME) | 55 | 36 |
| Vulkanisatdaten: 180°C, t95% | | | |
| Zugfestigkeit | (MPa) | 8,6 | 11,8 |
| Modul 300% | (MPa) | 6,2 | 10,9 |
| Shore Härte | | 84 | 86 |
| Compression Set B | | | |
| 22h/ 70°C | % | 42,6 | 29,4 |
| 70h/100°C | % | 29,2 | 15,3 |

Durch den Einsatz von Si 164 werden Zugfestigkeit, Modul und Compression Set deutlich verbessert. Ebenfalls deutlich besser wird die Verarbeitbarkeit.

**Patentansprüche**

1. Durch Wärmeeinwirkung vulkanisierbare Formmassen, bestehend aus einem oder mehreren natürlichen oder künstlichen Kautschuken bzw. Kunststoffen, die entweder mit Schwefel oder Schwefelspendern und Beschleunigern oder mit Peroxiden vulkanisierbar sind und weiteren üblichen Bestandteilen, flammhemmend mit Aluminium- und/oder Magnesiumhydroxid ausgerüstet,
dadurch gekennzeichnet, daß sie Aluminium- und/oder Magnesiumhydroxid in einer Menge von 20 bis 200 Gew.-Teilen pro 100 Gew.-Teilen Kautschuk oder Kunststoff und eine Organosillciumverbindung der allgemeinen Formel (I)

$(RO)_3 Si-(CH_2)_3-SCN$ enthalten,

in der R eine Alkylgruppe mit 1 bis 8 Kohlenstoffatomen darstellt.

2. Verfahren zur Herstellung von Formmassen gemäß Anspruch 1,
   dadurch gekennzeichnet, daß man eine Organosiliciumverbindung der allgemeinen Formel (I) abgemischt oder umgesetzt mit Aluminium- und /oder Magnesiumhydroxid einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 126 186 (DEGUSSA AG) <br> * Seite 3, Zeile 15 - Seite 4, Zeile 5 * <br> * Seite 9, Zeile 28 - Seite 10, Zeile 5 * <br> * Seite 13, Zeile 8 - Zeile 24 * <br> * Ansprüche 1,3; Beispiele * <br> --- | 1,2 | C08K5/54 |
| A | FR-A-2 098 031 (DEUTSCHE GOLD- UND SILBER-SCHEIDEANSTALT) <br> * Seite 7; Beispiele 1,3,5,6; Tabelle 1 * <br> * Ansprüche 1-5,8 * <br> & US-A-3 947 436 (G. ROCKTÄSCHEL ET AL) <br> --- | 1,2 | |
| A | KAUTSCHUK + GUMMI KUNSTSTOFFE <br> Bd. 28, Nr. 12, Dezember 1975, HEIDELBERG <br> Seiten 733 - 739; <br> F. THURN UND S. WOLFF: 'neue organosilane für die reifenindustrie' <br> ----- | 1,2 | |
|  |  |  | **RECHERCHIERTE SACHGEBIETE (Int. Cl.5)** <br><br> C08K |

Der vorliegende Recherchenbericht wurde für alle Patentansprüche erstellt

| Recherchenort | Abschlußdatum der Recherche | Prüfer |
|---|---|---|
| DEN HAAG | 10 APRIL 1992 | ENGEL S.L.H. |